# EUROPEAN PATENT APPLICATION

(11) **EP 1 994 826 A1**
(43) Date of publication of application: **26.11.2008**
(21) Application number: 08425190.9
(22) Date of filing: 25.03.2008
(51) Int. Cl.: A21B 1/33, F24C 3/12

(54) **An oven for baking foods**

(30) Priority: 25.05.2007 IT RN20070028; 07.11.2007 IT RN20070055
(71) Applicant: Indesit Company S.P.A., 60044 Fabriano (AN) (IT)
(72) Inventor: Mattogno, Gianluca, 62024 Matelica (Macerata) (IT); Lacche', Tiziano, 62024 Matelica (Macerata) (IT)
(74) Representative: Paolizzi, Marco

(57) **Abstract**

An oven for baking foods used preferably for household applications comprises:
- an inner compartment (2) for receiving the foods to be baked;
- means (40) for generating at least one baking flame in thermal contact with said inner compartment (2);
- a user interface (51) for selecting a baking program according to the type of food to be baked in the inner compartment (2) or of the types of foods to be baked simultaneously in the inner compartment (2);
- an electronic unit (53) which receives from the user interface (51) the information about the selected baking program and which commands at least one part of said means (40) for generating at least one flame.

According to the baking program selected through the user interface (51) said electronic unit (53) implements a time sequence of activation/deactivation of at least one part of said means (40) for generating at least one flame.

## Description

The present invention relates to an oven for baking foods: said baking oven is preferably employed in a home environment.

Known baking ovens comprise an inner compartment for receiving the foods to be baked, said inner compartment being defined by:
- an opening that enables to introduce and extract foods from said inner compartment, said opening being closable by a door;
- a bottom surface opposite to said door at least when said door is in closed position;
- a lower base and a ceiling that develop between said door and said bottom surface;
- two opposite lateral surfaces that develop between said base and said ceiling. The baking oven comprises a first gas-fired burner operating mainly by convection. Baking with a gas-fired oven is internationally appreciated and, with respect to baking with an electric oven, it has the advantage of being more economical and allowing for less "dry" baking (which is thus more appreciated, at least for certain foods).

The first burner is positioned at the lower base of the inner compartment, almost abutting the bottom surface of the inner compartment.

Sometimes there is also a gas-fired grill operating mainly by irradiation, which can be used to provide certain foods with superficial crispness. Said grill burner is positioned at the ceiling of the inner compartment. The activation of the burner operating mainly by convection or of the grill burner operating mainly by irradiation is achieved by acting manually on a dedicated selector that enables the alternated and not simultaneous operation of the two burners. Such ovens usually comprise a second selector that enables to regulate the baking temperature in the inner compartment and a timer which the user can set as a reminder of the baking duration. Once the set time interval expires, the timer emits a sound signal which should invite the user to turn the oven off or to check the baking operation.

The baking ovens described above present some drawbacks and/or limitations.

An inexperienced user may not know the most appropriate baking temperature or duration for the food (s)he is about to bake, and this could compromise the quality of the final product. Similarly, a user distracted by other occupations may not hear the sound signal of the timer, with the consequence of excessively prolonging the baking time and "burning" the food.

An object of the present invention is to overcome the aforesaid drawbacks, making available a baking oven that enables to associate electronic baking control with the advantages of gas baking.

These objects and others besides, which shall become more readily apparent in the description that follows, are achieved, in accordance with the present invention, by an oven having structural and functional characteristics in accordance with the appended independent claims, additional embodiments of said oven being identified in the appended and corresponding dependent claims. The invention is described in greater detail hereafter with the aid of the drawings, which represent an embodiment provided purely by way of non limiting example.

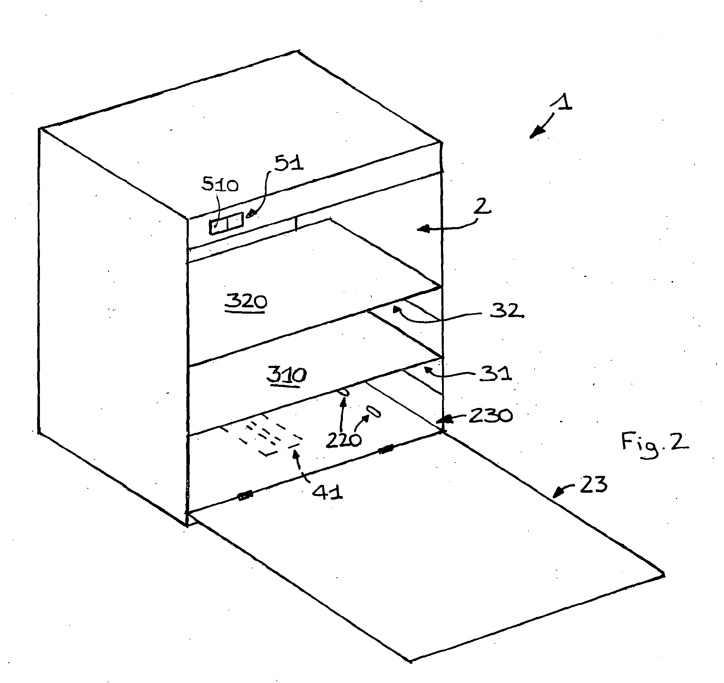

- Figures 1 and 2 show a schematic perspective views of an oven according to the present invention.
- Figure 3 shows a schematic lateral section view of an oven according to the present invention.

With reference to the accompanying figures, the reference number 1 designates an oven for baking foods according to the present invention.

Said oven for baking foods is preferably used for household applications and it comprises an inner compartment 2 for housing the foods to be baked. In technical terms, said inner compartment 2 is commonly called "muffle".

The inner compartment 2 is at least in part identified by an opening 230 that enables to introduce and extract foods from said inner compartment 2, said opening 230 being closable by a door 23. The inner compartment 2 is at least in part identified by a bottom surface 24 opposite to said door 23 at least when the latter is in closed position.

The inner compartment 2 is at least in part defined by a lower base 22 and by a ceiling 21. The lower base 22 and the ceiling 21 are mutually opposite. The lower base 22 and the ceiling 21 develop between said door 23 and said bottom surface 24. Preferably, the lower base 22 and the ceiling 21 develop substantially in a respective horizontal plane.

The inner compartment 2, moreover, is at least partly defined by two opposite lateral surfaces 25, 26, preferably with substantially vertical development, which develop between said base 22 and said ceiling 21.

The baking oven 1 further comprises at least a first support 31 that can be positioned in the inner compartment 2 and that is suitable to support directly a food to be baked or that is suitable to support directly a container in which the food to be baked is placed. When it is in an operative position, the first support 31 is interposed between the lower base 22 and the ceiling 21. In particular, the first support is at a non-nil distance from said lower base 22. In an alternative solution, the first support 31 can, at the limit, coincide with the lower base 22. The first support 31 comprises, or coincides with, a first shelf 310 or a roasting jack 311.

The first shelf 310 may advantageously be a pan defining a continuous support plane without holes; alternatively, the first shelf 310 can be a grille; if the first shelf 310 is a pan, it can also support the foods directly; if the first shelf 310 is a grille, it supports a container which in turn contains the foods.

The oven 1 further comprises a second support 32 that can be positioned in the inner compartment 2 and that is suitable to support directly a food to be baked or that is suitable to support directly a container in which the food to be baked is placed; said second support 32 comprises, or coincides with, a second shelf 320. The second support 32 overlies the first support 31.

The first and the second support 31, 32, and in particular the first and the second shelf 310, 320, can be inserted into and extracted from the inner compartment 2. The oven 1 comprises means 30 for positioning the first and/or the second support 31, 32 internally to the inner compartment 2.

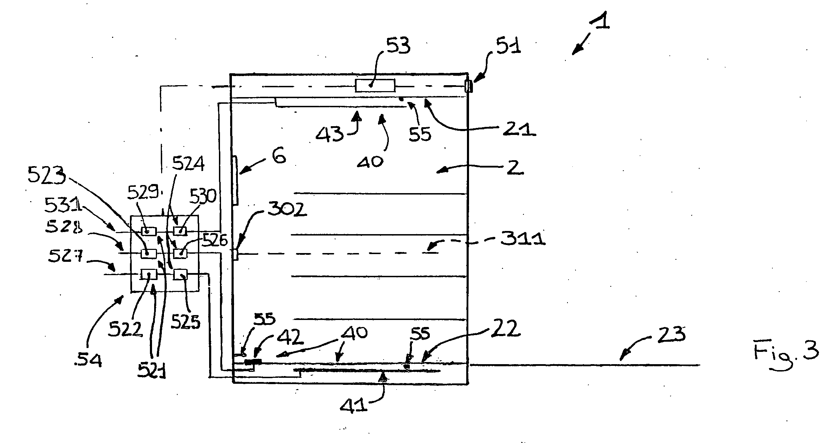

The positioning means 30 may comprise substantially horizontal guides 301 that support the first shelf 310. The same guides 301 normally can support also the second shelf 320. The guides 301 are usually provided on the lateral walls 25, 26 that delimit at least in part the inner compartment 2. Supporting the first or the second shelf 310, 320 advantageously requires the combined action of two guides 301, each provided on one of the two opposite lateral surfaces 25, 26. The guides 301 obtained on the same lateral surface 25, 26 are positioned in the inner compartment 2 at a different distance from the lower base 22. The positioning means 30 can also comprise a support 302 of the roasting jack 311. Said support 302 of the roasting jack 311 usually enables to place the roasting jack 311 in horizontal position (see figure 3, where a dashed line schematically indicates the roasting jack 311).

The baking oven 1 comprises means 40 for generating at least one baking flame in thermal contact with said inner compartment 2.

The oven 1 comprises a user interface 51 for selecting the desired baking program according to the type of food to be baked in the inner compartment (e.g. pizza, pasta, fish, etc.). The user interface 51 enables to select the baking program also according to the type of foods to be baked simultaneously in the inner compartment 2. In this latter case, advantageously foods to be baked are placed both on the first and on the second support 31, 32, in particular both on the first and on the second shelf 310, 320. According to the selected baking program (and hence to the foods to be baked) the operating manual of the oven 1 specifies at what distance from the lower base 22 it is best to place the first and/or the second shelf 310, 320; the distance from the lower base 22 can be specified indicating in which guides 301 the first and/or the second shelf 310, 320 are to be positioned.

Advantageously the user interface 51 comprises means 510 for signalling information to the user. The signalling means 510 indicate to the user at what distance from the lower base 22 it is best to place the first and/or the second shelf 310, 320 according to the selected baking program. As indicated above, this distance can be specified indicating in which guides 301 the first and/or the second shelf 310, 320 are to be placed. Said signalling means 510 comprise for example a display or a voice reproduction device.

The guides 301 comprise a presence sensor (which can advantageously be a weight sensor) that detects whether the first and/or the second shelf 310, 320 are positioned on the guide 301 indicated by the signalling means 510. If the user places the first and/or the second shelf 310, 320 on a different guide from the one previously signalled by the signalling means 510, then the signalling means 510 will notify the user of the positioning error of the first and/or of the second shelf 310, 320.

The oven 1 further comprises an electronic unit 53 which receives from the user interface 51 the information about the selected baking program and which commands at least one part of said means 40 for generating at least one flame.

According to the baking program selected through the user interface 51 said electronic unit 53 implements a time sequence of activation/deactivation of at least one part of said means 40 for generating at least one flame.

The time sequence is selected among a plurality of pre-determined and pre-stored time sequences, each associated to a baking program. In an embodiment, the time sequence is independent of thermodynamic parameters measurable in the inner compartment 2 during the baking operation.

Each activation phase and/or each deactivation phase of said time sequence pertains to a time interval whose duration is equal to a predetermined value.

In an alternative embodiment, the time sequence is influenced by at least one thermodynamic parameter measured in the inner compartment 2 during the baking operation (e.g. temperature and/or humidity). For example, at least a first part of the means 40 for generating at least one flame are kept active until a certain pre-set temperature is reached, then a second part of the means 40 for generating at least one flame is activated until a second pre-set temperature is reached (or for a pre-set period) and so on.

Advantageously the duration of at least one part of the activation and/or deactivation phases of the time sequence is equal to a predetermined value or it is determined by the reaching of a predetermined temperature in the inner compartment 2.

If the oven 1 is provided with weight sensor operatively connected with the positioning means 30 of the first and/or the second support 31, 32, the time sequence can be influenced by the variation, during the baking operation, of the weight of the foods supported by the first and/or by the second support 31, 32, said weight variation being detected by means of said weight sensor.

In general, the time sequence of activation/deactivation of the means 40 for generating at least one flame was optimised with a series of tests according to the type of food or of the types of foods to be baked.

The time sequence of activation/deactivation of at least one part of the means 40 for generating at least one flame comprises a regulation in time of the thermal power delivered by said at least one part of the means 40 for generating at least one flame, said thermal power being able to assume at least two values different from zero. Advantageously, the thermal power of said at least one part of the means 40 for generating at least one flame can vary continuously.

When and which part of the means 40 for generating at least one flame to activate (and with what intensity) or deactivate is a function of the baking program set by the user.

Advantageously the means 40 for generating at least one flame comprise a first gas-fired burner 41. The first burner 41 is in thermal contact with said inner compartment 2. The first burner 41 is a non grill burner. It operates mainly by convection.

The time sequence of activation/deactivation of at least one part of the means 40 for generating at least one flame comprises a time sequence of activation/deactivation of the first gas-fired burner 41.

The time sequence of activation/deactivation of the first burner 41 provides for the regulation in time of the thermal power delivered by the first gas-fired burner 41, said thermal power delivered by the first burner 41 being able to assume at least two values different from zero. Advantageously, said thermal power delivered by the first gas-fired burner 41 can be varied continuously between a maximum value and a minimum value.

Advantageously the means 40 for generating at least one flame comprise a second gas-fired burner 42. The second burner 42 is a non grill burner. It operates mainly by convection. The second gas-fired burner 42 is in thermal contact with said inner compartment 2.

The time sequence of activation/deactivation of at least one part of the means 40 for generating at least one flame comprises a time sequence of activation/deactivation of the second burner 42.

The time sequence of activation/deactivation of the second burner 42 provides for the regulation in time of the thermal power delivered by the second gas-fired burner 42, said thermal power delivered by the second burner 42 being able to assume at least two values different from zero. Advantageously, said thermal power delivered by the second gas-fired burner 42 can be varied continuously between a maximum value and a minimum value.

The time sequence of activation/deactivation of the first burner 41 can be different from the time sequence of activation/deactivation of the second burner 42.

Advantageously the first and the second burner 41, 42 can operate simultaneously.

Moreover, the first and the second burner 41, 42 can be activated independently of each other. The first and the second burner 41, 42 comprise one or more slits wherefrom develop cooking flames.

Advantageously the means 40 for generating at least one flame comprise a gas-fired grill burner 43. Said grill burner 43 operates mainly by irradiation.

As shown in figure 3 the gas-fired grill burner 43 is positioned at the ceiling 21. It can advantageously be used for baking with the roasting jack 311.

The time sequence of activation/deactivation of at least one part of the means 40 for generating at least one flame comprises a time sequence of activation/deactivation of the gas-fired grill burner 43.

The time sequence of activation/deactivation of the gas-fired grill burner 43 provides for the regulation in time of the thermal power delivered by the gas-fired grill burner 43, said thermal power being able to assume at least two values different from zero.

The predetermined time sequence of activation/deactivation of at least one part of the means 40 for generating at least one flame is calibrated to uniform the baking times of a first and a second food positioned simultaneously on the first and on the second support 31, 32, in particular on the first and on the second shelf 310, 320.

The duration of the activation and/or deactivation phases of the time sequence of the first and/or of the second burner 41, 42 and/or of the grill burner 43 is equal to a predetermined value or it is determined by the reaching of a predetermined temperature in the inner compartment 2.

Advantageously the regulation in time of the thermal power delivered by said at least one part of the means 40 for generating at least one flame takes place after predetermined time intervals or upon reaching a predetermined interval in the inner compartment 2.

Alternatively the time sequence of activation/deactivation of the first and/or of the second burner 41, 42 and/or of the grill burner 43 is independent of thermodynamic parameters measurable in the inner compartment 2 during the baking operation.

In this case, also the regulation in time of the thermal power delivered by said at least one part of the means 40 for generating at least one flame is independent of thermodynamic parameters measurable in the inner compartment 2 during the baking operation.

The instructions that enable the electronic unit 53 to implement the time sequence of activation/deactivation can be stored in the baking oven 1 during its manufacture, or they can be introduced at a later time through means for programming the oven 1 e.g. a programming keyboard (included in the user interface 51 or constituting a separate device from the user interface 51), or the oven 1 could comprise wireless or wired means for connecting to a remote database (e.g. the Internet). In this latter option, the connection between the cooking oven 1 and the remote database can be a direct connection and take place for example through the electrical power grid or in radio frequency or through telephone lines; otherwise, the connection between the baking oven 1 and the remote database can be an indirect connection, e.g. the connection assured by the general controller which is described in the Italian patent application with the deposit number TO2005A000314 and which is able to serve as gateway between a series of electrical appliances comprised in a local area network and one or more remote devices.

The oven 1 comprises actuator means 54 for carrying out the commands provided by the electronic control unit 53. The actuator means 54 are operatively interposed the said electronic unit 53 and said at least one part of the flame generating means 40.

The actuator means 54 comprises shut-off means 521 that interrupt the flow of gas to at least one part of the means 40 for generating at least one flame.

The shut-off means 521 interrupt to flow of gas to the first burner 41 and/or to the second burner 42 and/or to the grill burner 43.

The shut-off means 521 comprise a first shut-off valve 522 which can prevent the flow of gas to the first burner 41. The shut-off means 521 comprise a second shut-off valve 523 that can prevent the flow of gas to the second burner 42. The shut-off means 521 comprise an additional shut-off valve 529 that can prevent the flow of gas to the grill burner 43.

The actuator means 54 comprise means 55 for igniting the gaseous combustible mixture supplied to at least one part of the means 40 for generating at least one baking flame (said ignition means 55 may, for example, comprise a device that generates sparks at the time when the ignition of the gaseous combustible mixture is desired). Advantageously, the means 55 for igniting the mixture are positioned in proximity both to the first and to the second burner 41, 42. The ignition means 55 are also positioned in proximity to the grill burner 43, if one is present.

The actuator means 54 comprises regulating means 524 that regulate the flow of gas to at least one part of the means 40 for generating at least one flame.

The means 524 for regulating the flow of gas regulate to flow of gas to the first burner 41 and/or to the second burner 42 and/or to the grill burner 43.

In particular the regulating means 524 comprise a first regulating valve 525 positioned upstream of the first burner 41. The regulating means 524 comprise a second regulating valve 526 positioned upstream of the second burner 42. The first and the second regulating valve 525, 526 regulate the flow of gas respectively to the first and to the second burner 41, 42 and thus regulate the thermal power of the first and of the second burner 41, 42. The regulating means 524 comprise an additional regulation valve 530 that regulates the flow of gas to the grill burner 43 and thus regulates the thermal power of the grill burner 43. The first shut-off valve 522 and the first regulating valve 525 are positioned on a line 527 for supplying the gas to the first burner 41. The second shut-off valve 523 and the second regulating valve 526 are positioned on a line 528 for supplying gas to the second burner 42.

The valve 529 for shutting off the flow of gas to the grill burner 43 and the valve 530 for regulating the flow of gas to the grill burner 43 are positioned on a line 531 for supplying gas to the to the grill burner 43.

In an embodiment that is not illustrated herein, the shut-off means 521 comprise a single valve that can prevent flow both to the first and to the second burner 41, 42 and possibly also to the grill burner 43. Said valve is positioned upstream of a downstream branch-off from which originate the lines 527, 528 supplying gas to the first burner 41 and to the second burner 42, the regulating valves 525, 526 being positioned on said lines 527, 528. If supply is to be shut off also to the grill burner 43, then said valve is positioned upstream of a branch-off from which originates the supply line 531 that brings the gas also to the grill burner 43, the regulating valve 530 being positioned on said line 531.

Let an ideal reference straight line coinciding with the physical vertical be defined and let a reference plane also be defined, orthogonal to said reference straight line and passing through at least one point of the first support 31. The positioning means enable to position the first support 31 in at least one operative position in which said reference plane is above the first and/or the second burner 41, 42 and in which said first support 31 is in the inner compartment 2.

Advantageously, the reference plane orthogonal to said ideal reference straight line coinciding with the physical vertical passes through the point of said first support 31 that is closest to the lower base 22.

The positioning means 30 enable the first support 31 to assume a plurality of distinct operative positions in the inner compartment 2. As the operative position of the first support 31 changes, the location of the first support 31 also changes along the direction of development of the ideal reference straight line; in each of the operative positions allowed by the positioning means 30, said reference plane is above said first gas-fired burner 41 and/or said second gas-fired burner 42.

Since heat tends to rise upwards, it is important that both the first and the second burner 41, 42 be positioned lower (relative to the physical vertical) than the first and/or the second support 31, 32.

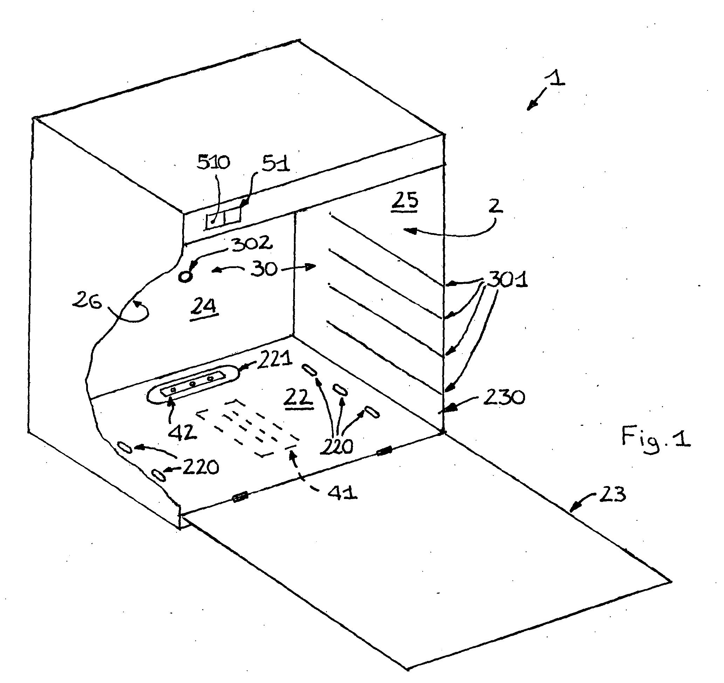

Advantageously the first or the second gas-fired burner 41, 42 is in proximity to the lower base 22. As shown by way of non limiting example in figure 1, both the first and the second burner 41, 42 are in proximity to the lower base 22. Advantageously the first or the second burner 41, 42 is in proximity to said bottom surface 24. In a particular configuration, not illustrated, both the first and the second burner 41, 42 are in proximity to the bottom surface 24. In figure 1, the second burner 42 is positioned in proximity to the bottom surface 24.

With reference to the solution schematically illustrated in figure 1, the second burner 42 develops along a direction joining said two lateral surfaces 25, 26. The second burner 42 comprises a tubular element developing along the direction joining said two lateral surfaces 25, 26 for about 13-15 centimetres and its width is about 1 centimetre. On the upper part of the tubular element are obtained slits that, when the second burner 42 is activated, subdivide the baking flame. Relative to the physical vertical, advantageously the second burner 42 is lower than the lower base 22 or it is substantially at the same height as the lower base 22.

The first burner 41 develops between said door 23 and said second burner 42. Preferably, the first burner 41 remains at a distance of a few centimetres both from the door 23 and from the second burner 42. The first burner 41 is advantageously positioned underneath said lower base 22. In particular said first burner 41 is positioned underneath the first support 31, e.g. it is positioned underneath the first shelf 310.

The first shelf 310, when it is in said inner compartment 2, is positioned at a predetermined distance from the bottom surface 24, to promote the upward convective motion of the heat. With reference to the solution schematically shown in figure 1, this enables to promote the upward convective motion of the heat generated by the second burner 42 when said burner is placed at the lower base 22 in proximity to the bottom surface 24.

With reference to figure 1, if the same food is to be baked simultaneously on the first and on the second shelf 310, 320, then the second burner 42 can be regulated to maximum power and the first burner 41 positioned immediately underneath the first shelf 310. The activation of the first or of the second burner 41, 42 is normally controlled by the time sequence selected according to the type of food to be cooked. The heat generated by the second burner 42 will tend to rise and to concentrate at the ceiling 21 of the inner compartment 2, baking in particular the foods placed on the second shelf 320, whilst the first burner 41 is responsible mostly for baking the foods placed on the first shelf 310. In this way, it is possible to prevent the foods placed on the second shelf 320 to be fully baked before the ones placed on the underlying first shelf 310, thereby obtaining a simultaneous optimal cooking of the foods placed on both shelves.

With reference to the solution illustrated in figure 1, the lower base 1 has a plurality of holes 22 to enable a better distribution in the inner compartment 2 of the heat coming from the first burner 41 when said first burner 41 is positioned underneath said lower base 22. The lower base 22 further comprises a slit 221 with greater size than the holes 220. Said slit 221 enables the entry into the inner compartment 2 of the hot air coming from the second burner 42. In a particular configuration, not illustrated, the first and the second burner 41, 42 could be side by side and develop along the direction joining the door 23 and the bottom surface 24.

The oven 1 could also comprise a fan 6 that moves the air of the inner compartment 2, in such a way as to expand the baking functions which the oven can execute. In this way, it is possible to bake simultaneously on the first and on the second shelf 310, 320 foods that are even highly dissimilar from each other (in terms of type and baking time). It is possible, in this way, further to improve heat distribution in the inner compartment 2. Advantageously, the time sequence of activation and deactivation of the rotation of the fan 6 is a function of the selected baking program and it is commanded by an electronic board. Preferably, said electronic board is a part of said electronic control unit 53.

The invention achieves important advantages.

First of all, it allows to combine the advantages of gas baking (e.g. in terms of energy savings or baking quality) and the convenience of electronic control which manages the activation, the regulation and the deactivation of the various burners according to the foods to be baked.

Secondly, it allows a homogeneous baking of the foods, even if they are baked simultaneously on two distinct shelves.

The invention thus conceived can be subject to numerous changes and variants, without thereby departing from the scope of the inventive concept that characterises it.

Moreover, all details can be replaced with other, technically equivalent, elements.

In practice, all materials used, as well as the dimensions, can be any, according to requirements.

## Claims

1. An oven for baking foods used preferably for household applications, comprising:
- an inner compartment (2) for receiving the foods to be baked;
- means (40) for generating at least one baking flame in thermal contact with said inner compartment (2);
**characterised in that** it comprises:
- a user interface (51) for selecting a baking program according to the type of food to be baked in the inner compartment (2) or of the types of foods to be baked simultaneously in the inner compartment (2);
- an electronic unit (53) which receives from the user interface (51) the information about the selected baking program and which commands at least one part of said means (40) for generating at least one flame;
according to the baking program selected through the user interface (51) said electronic unit (53) implements a time sequence of activation/deactivation of at least one part of said means (40) for generating at least one flame.

2. An oven as claimed in claim 1, **characterised in that** said time sequence is selected among a plurality of pre-determined and pre-stored time sequences, each associated to a baking program, said time sequence being independent of thermodynamic parameters measurable in the inner compartment (2) during the baking operation.

3. An oven as claimed in claim 1 or 2, **characterised in that** each activation phase and/or each deactivation phase of said time sequence pertains to a time interval whose duration is equal to a predetermined value.

4. An oven as claimed in claim 1, **characterised in that** said time sequence is influenced by at least one thermodynamic parameter measured in the inner compartment (2) during the baking operation.

5. An oven as claimed in claim 1 or 4, **characterised in that** the duration of at least one part of the activation and/or deactivation phases of said time sequence is equal to a predetermined value or it is determined by the reaching of a predetermined temperature in the inner compartment (2).

6. An oven as claimed in any of the previous claims, **characterised in that** said time sequence of activation/deactivation of at least one part of the means (40) for generating at least one flame comprises a regulation in time of the thermal power delivered by said at least one part of the means (40) for generating at least one flame, said thermal power being able to assume at least two values different from zero.

7. An oven as claimed in any of the previous claims, **characterised in that** said means (40) for generating flames comprise a first gas-fired burner (41).

8. An oven as claimed in claim 7, **characterised in that** said first burner (41) is a non grill burner and it operates mainly by convection.

9. An oven as claimed in claim 7 or 8, **characterised in that** said time sequence of activation/deactivation of at least one part of the means (40) for generating at least one flame comprises a time sequence of activation/deactivation of the first gas-fired burner (41).

10. An oven as claimed in claim 9, **characterised in that** said time sequence of activation/deactivation of the first burner (41) provides for the regulation in time of the thermal power delivered by the first gas-fired burner (41), said thermal power delivered by the first burner (41) being able to assume at least two values different from zero.

11. An oven as claimed in claim 7 or 8 or 9 or 10, **characterised in that** said means (40) for generating at least one flame comprise a second gas-fired burner (42).

12. An oven as claimed in claim 11, **characterised in that** said second burner (42) is a non grill burner and it operates mainly by convection.

13. An oven as claimed in claim 11 or 12, **characterised in that** said time sequence of activation/deactivation of at least one part of the means (40) for generating at least one flame comprises a time sequence of activation/deactivation of the second burner (42).

14. An oven as claimed in claim 13, **characterised in that** the time sequence of activation/deactivation of the second burner (42) provides for the regulation in time of the thermal power delivered by the first gas-fired burner (42), said thermal power delivered by the second burner (42) being able to assume at least two values different from zero.

15. An oven as claimed in claim 13 or 14 when it depends on claim 9 or 10, **characterised in that** the time sequence of activation/deactivation of the first burner (41) can be different from the time sequence of activation/deactivation of the second burner (42).

16. An oven as claimed in any of the previous claims 11 through 15, **characterised in that** said first and said second burner (41, 42) can function simultaneously.

17. An oven as claimed in any of the previous claims 11 through 16, **characterised in that** said first and said second burner (41, 42) can be activated independently from each other.

18. A baking oven as claimed in any of the claims 11 through 17 in which an ideal reference straight line is defined, coinciding with the physical vertical, and a reference plane is defined, orthogonal to said ideal reference straight line and passing through at least one point of the first support (31), **characterised in that** it comprises:
- at least a first support (31) which can be positioned in the inner compartment (2) and is suitable to support directly a food to be baked or is suitable to support directly a container in which the food to be baked is placed;
- means (30) for positioning the first support (31) in at least one operative position in which said reference plane is positioned above the first and the second burner (41, 42) and in which said first support (31) is in the inner compartment (2).

19. An oven as claimed in claim 18, **characterised in that** the first support (31) comprises, or coincides with, a first shelf (310) or a roasting jack (311).

20. An oven as claimed in claim 18 or 19, **characterised in that** the positioning means (30) enable the first support (31) to assume a plurality of distinct operative positions in the inner compartment (2); as the operative position of the first support (31) changes, the location of the first support (31) also changes along the direction of development of the ideal reference light; in each of the operative positions allowed by the positioning means (30), said reference plane being located above said first gas-fired burner (41) and said second gas-fired burner (42).

21. An oven as claimed in claim 18 or 19 or 20, **characterised in that** it comprises a second support (32) which can be positioned in the inner compartment (2) and which is suitable to support directly a food to be cooked or that is suitable to support directly a container in which the food to be cooked is placed; said second support (32) comprises, or coincides with, a second shelf (320), said second support (32) overlying the first support (31)

22. An oven as claimed in claim 21, **characterised in that** the predetermined time sequence of activation/deactivation of at least one part of the means (40) for generating at least one flame is calibrated to uniform the baking times of a first and a second food positioned simultaneously on the first and on the second support (31, 32).

23. An oven as claimed in any of the claims 18 through 22, **characterised in that** it comprises a weight sensor operatively connected with the means (30) for positioning the first and/or the second support (31, 32); the time sequence can be influenced by the variation, during the baking operation, of the weight of the foods supported by the first and/or by the second support (31, 32), said weight variation being detected by said weight sensor.

24. An oven as claimed in any of the previous claims, **characterised in that** said inner compartment (2) is at least partly identified by a lower base (22) and by a ceiling (21) opposite to each other.

25. An oven as claimed in any of the claims 1 through 23, **characterised in that** said inner compartment (1) is at least partly identified by:
- an opening (230) that enables to introduce and extract foods from said inner compartment (2), said opening (230) being closable by a door (23);
- a bottom surface (24) opposite to said door (23) at least when said door is in closed position;
- a lower base (22) and a ceiling (21) that develop between said door (23) and said bottom surface (24);
- two opposite lateral surfaces (25, 26) that develop between said base (22) and said ceiling (21).

26. An oven as claimed in claim 24 or 25 when it depends directly or indirectly on claim 18 and/or 21, **characterised in that** the user interface (51) comprises signalling means that indicate to the user at what distance from the lower base (22) to place the first and/or the second support (31, 32).

27. An oven as claimed in claim 24 or 25 or 26 when it depends directly or indirectly on claim 18, **characterised in that** said reference plane orthogonal to said ideal reference straight line coinciding with the physical vertical passes through the point of said first support (31) that is closest to the lower base (22).

28. An oven as claimed in claim 24 or 25 or 26 or 27, when it depends directly or indirectly on claim 18, **characterised in that** the first support (31), when it is in an operative position, is interposed between the lower base (22) and the ceiling (21) and it is at a distance different from zero from said lower base (22).

29. An oven as claimed in any of the claims 24 through 28 when it depends on claim 7 or claim 11, **characterised in that** said first and/or said second gas-fired burner (41, 42) is/are in proximity to the lower base (22).

30. An oven as claimed in any of the claims 25 through 26 when it depends on claim 7 or claim 11, **characterised in that** said first and/or said second gas-fired burner (41, 42) is/are in proximity to said bottom surface (24).

31. An oven as claimed in any of the claims 25 through 29 when it depends directly or indirectly on claim 19, **characterised in that** said first shelf (310), when it is in said inner compartment (2), is positioned at a predetermined distance from the bottom surface (24), to promote the upwards convective motion of heat.

32. An oven as claimed in any of the previous claims, **characterised in that** said means (40) for generating at least one flame comprise a gas-fired grill burner (43).

33. An oven as claimed in claim 32 when it depends directly or indirectly on claim 24 or 25, **characterised in that** the grill burner (43) is positioned at the ceiling (21).

34. An oven as claimed in claim 32 or 33, **characterised in that** said time sequence of activation/deactivation of at least one part of the means (40) for generating at least one flame comprises a time sequence of activation/deactivation of the gas-fired grill burner (43).

35. An oven as claimed in claim 32 or 33 or 34, **characterised in that** the time sequence of activation/deactivation of the gas-fired grill burner (43) provides for the regulation in time of the thermal power delivered by the gas-fired grill burner (43), said thermal power being able to assume at least two values different from zero.

36. An oven as claimed in any of the previous claims, **characterised in that** it comprises actuator means (54) for carrying out the commands provided by the electronic unit (53), said actuator means (54) being operatively interposed between the electronic unit (53) and said at least one part of the means (40) for generating at least one flame.

37. An oven as claimed in claim 36, **characterised in that** the actuator means (54) comprise shut-off means (521) that interrupt the flow of gas to at least one part of the means (40) for generating at least one flame.

38. An oven as claimed in claim 37 when it depends on claim 7 or on claim 11 and/or on claim 32, **characterised in that** the shut-off means (521) interrupt the flow of gas to the first burner (41) and/or to the second burner (42) and/or to the grill burner (43).

39. An oven as claimed in any of the claims 36 through 38, **characterised in that** the actuator means (54) comprise regulating means (524) that regulate the flow of gas destined to at least one part of the means (40) for generating at least one flame.

40. An oven as claimed in claim 39 when it depends on claim 7 or on claim 11 and/or on claim 32, **characterised in that** the means (524) for regulating the flow of gas regulate the flow of gas to the first burner (41) and/or to the second burner (42) and/or to the grill burner (43).

41. An oven as claimed in any of the claims 36 through 40, **characterised in that** the actuator means (54) comprise means (55) for igniting the gaseous combustible mixture supplied to at least one part of the means (40) for generating at least one baking flame.

42. An oven as claimed in any of the previous claims, **characterised in that** it comprises wireless or wired means for connection to a remote database.
